# EUROPEAN PATENT SPECIFICATION

(11) **EP 0 448 710 B1**
(45) Date of publication and mention of the grant of the patent: **03.04.1996**
(21) Application number: 90917750.3
(22) Date of filing: 11.10.1990
(51) Int. Cl.: B65G 53/52, B65G 53/06

(54) **SOURCE MATERIAL DELIVERY SYSTEM**
ANLAGE ZUR ZUFÜHRUNG VON ROHSTOFFEN
SYSTEME D'ACHEMINEMENT DE MATIERE PREMIERE

(30) Priority: 18.10.1989 US 423771
(43) Date of publication of application: 02.10.1991
(73) Proprietor: ASE AMERICAS, INC., Billerica, MA 01821 (US)
(72) Inventor: MEIER, Frederick, U., Merrimack, NH 03054 (US); LARROUSSE, Mark, F., Nashua, NH 03062 (US); HARVEY, David, S., Groton, MA 01450 (US)
(74) Representative: Thomson, Paul Anthony
(86) International application number: US9005836
(87) International publication number: WO9105723

(56) References cited:
- DE-A- 2 342 554
- US-A- 1 164 899
- US-A- 1 442 061
- US-A- 3 380 780
- US-A- 4 775 267

## Description

### Field of the Invention

The present invention relates to material feed systems, and more particularly to apparatus for repeatedly delivering a predetermined quantity of particulate material to a remote site.

### Background of the Invention

In a variety of industrial processes it is necessary to repeatedly deliver a predetermined quantity of solid particulate material to a location remote from the location where the particulate material is stored. For instance, with apparatus for growing hollow, tubular crystalline bodies of the type disclosed in U.S. Patent No. 4,544,528, it is important that the infeed material (particles of solid silicon) be delivered from a storage site to the crucible of the apparatus at substantially the same rate molten silicon is consumed in growing a crystalline body. The delivery is accomplished, for instance, by dispensing the particles from the storage container using a vibratory feeder and then transporting the dispensed particles into the crucible of the apparatus using a chip thruster of the type disclosed in U.S. Patent No. 4,661,324 to Sink et al (the '324 patent).

Unfortunately, with known mechanisms for dispensing solid particulate material from the storage container, e.g. vibratory feeders, it tends to be difficult to precisely control the quantity of material dispensed per unit time. As a result, more or less particulate material may be delivered to the downstream location, e.g. the chip thruster of the '324 patent, than is desired.

### Objects and Summary of the Invention

One object of the present invention is to provide a system for repeatedly transporting a predetermined quantity of particulate material to a remote location.

A second object of the present invention is to provide a system for use in continuously replenishing the silicon melt in an apparatus for growing hollow, tubular crystalline bodies so as to maintain the level of the melt within predetermined limits.

According to the present invention there is provided apparatus for growing hollow, tubular, crystalline bodies comprising a furnace, a crucible for containing a melt of silicon, said crucible having a bottom end wall and an opening in said bottom end wall, a hollow pipe extending through said bottom end wall and terminating above said crucible, and a feed mechanism for transporting a predetermined quantity of silicon particles at certain intervals to said crucible as replacement material for that withdrawn to grow said tubular bodies, said silicon particles being transported through said hollow pipe and ejected from the top end of said hollow pipe so that said particles will fall by gravity back into said crucible, characterized in that said feed mechanism comprises:
(a) storage means comprising a container for storing said silicon particles, said container having a tapered bottom section leading to a discharge orifice;
(b) a receiving chamber positioned below said storage means in communication with its discharge orifice so that a continuous flow of silicon particles moves from said storage means to said receiving chamber under the pull of gravity;
(c) the inside diameter of said orifice and the internal circular cross-sectional configuration and inside diameter of said receiving chamber being such that said silicon particles accumulate in said receiving chamber in a loosely-formed pile, said pile accumulating up to said discharge orifice so that said pile consists of a predetermined quantity of said silicon particles;
(d) first and second conduits, said first conduit being connected at one end to said chamber and downstream thereof to a third conduit, said first conduit providing a first passageway for said silicon particles from said receiving chamber to said third conduit, said second conduit providing a second passageway intersecting said first passageway, and said third conduit providing a third passageway for said silicon particles to said hollow pipe;
(e) first fluid delivery means coupled to said receiving chamber for providing a first stream of a pressurized gaseous fluid to said receiving chamber so as to displace said pile of silicon particles from said receiving chamber to the region of said first passageway where said second passageway intersects said first passageway; and
(f) second fluid delivery means coupled directly to said second conduit for providing a second stream of a pressurized gaseous fluid through said second passageway to said first passageway so as to entrain said silicon particles in said first passageway and transport said entrained silicon particles through said third passageway to said pipe.

Also in accordance with the present invention there is provided a method for intermittently feeding, in a free-flowing manner, spherical silicon particles into a crystal growth apparatus for growing a tubular crystalline silicon body, said apparatus comprising a furnace, and a crucible for containing a melt of silicon disposed within said furnace;
said method comprising transporting said spherical silicon particles from a storage means to said crystal growth apparatus under gaseous fluid pressure via a passageway means;
wherein said spherical silicon particles are discharged by gravity flow from said storage means through a discharge orifice into a receiving chamber, said chamber being so configured and arranged as to permit only a predetermined quantity of said spherical silicon particles to accumulate in the form of a loose pile within said chamber;
said method further including the following steps:
injecting a first stream of pressurized fluid into said chamber so as to cause said pile of spherical silicon particles to be transferred out of said chamber into a first conduit;
injecting a second stream of pressurized fluid into said first conduit so as (i) to entrain said spherical silicon particles in said first conduit in said second stream and (ii) to transfer said entrained spherical silicon particles through a passageway connecting said first conduit and said crystal growth apparatus; and
thereafter repeating the forgoing steps in sequence so that a predetermined quantity of spherical silicon particles is delivered intermittently to said crystal growth apparatus by the application of said first and second streams of pressurized fluid.

The present system is particularly adapted for use as one component in a larger system for continuously replenishing the silicon melt in the crucible in a crystal furnace, e.g., of the type disclosed in U.S. Patent No. 4,544,528 to Stormont et al. The system of the present invention includes a container for storing solid particulate material that is characterized by a substantially uniform particle shape, a receiving chamber coupled with the container for receiving particles from the container, a first high pressure gas jet for providing a pulse of pressurized gas which entrains particles in the receiving chamber and transports the entrained particles into a conduit, and a second high pressure gas jet which provides a stream of pressurized gas in the conduit except when a pulse of pressurized gas is being emitted by the first high pressure gas jet.

The receiving chamber is positioned directly below the storage container and is coupled with the container so that particles in the container will fall under the pull of gravity into the receiving chamber. The latter is sized and configured so that the particles falling into the receiving chamber will coact with one another and with the sidewalls of the receiving chamber to form a pile of particles having a known angle of repose and hence a predetermined volume of particles. This pile blocks the aperture connecting the container and the receiving chamber, thereby preventing additional particles from falling into the receiving chamber.

The predetermined quantity of particles in the receiving chamber is carried by a pulse of gas provided by the first jet out of the receiving chamber and into the conduit. A stream of pressurized gas from the second jet carries the silicon particles through the conduit and ejects them from the far end of the conduit for disposition by other apparatus. Thus, for example, the conduit may be coupled to apparatus for further handling or otherwise treating the particles. In the preferred embodiment of the invention, the particles are spherical silicon particles and the conduit is connected so as to feed the particles to crystal growing apparatus.

### Brief Description of the Drawings

For a fuller understanding of the nature and objects of the present invention, reference should be made to the following detailed description taken in connection with the accompanying drawings wherein:
Fig. 1 is a fragmented view in elevation, with some components shown in section, of a source material delivery system embodying the present invention coupled to the source material feed mechanism associated with a crystal growth furnace;
Fig. 2 is a schematic cross-sectional side elevation view of the source material delivery system embodying the present invention;
Fig. 3 is a timing diagram illustrating the timing sequence for valves of the same source material delivery system;
Fig. 4 is an enlarged view of the bottom portion of the delivery system illustrated in Fig. 2 shown at time T1; and
Fig. 5 is an enlarged view of the bottom portion of the same delivery system just after time T1.

### Detailed Description of the Invention

The present invention requires the use of free-flowing particulate material having a substantially uniform particle shape and a relatively narrow particle size range such that different piles of the same particles formed by free fall will have the same angle of repose, whereby the angle of repose is predictable for subsequently formed piles. Preferably the particles are spherical and, in the preferred embodiment of this invention, the particulate source material comprises high purity, spherical, free-flowing beads of silicon particles, e.g. "ETHYL POLYSILICON" sold by Ethyl Corporation, Baton Rouge, Lousiana. The ETHYL POLYSILICON particles or beads, which are believed to be manufactured by a fluidized bed process, are spherical and have a particle size distribution of 150-1500 microns, with an average size of 700 microns. However, larger or smaller particle sizes may be accomodated depending upon such factors as source material composition, the geometry of the delivery system, and the apparatus to which the particles are fed.

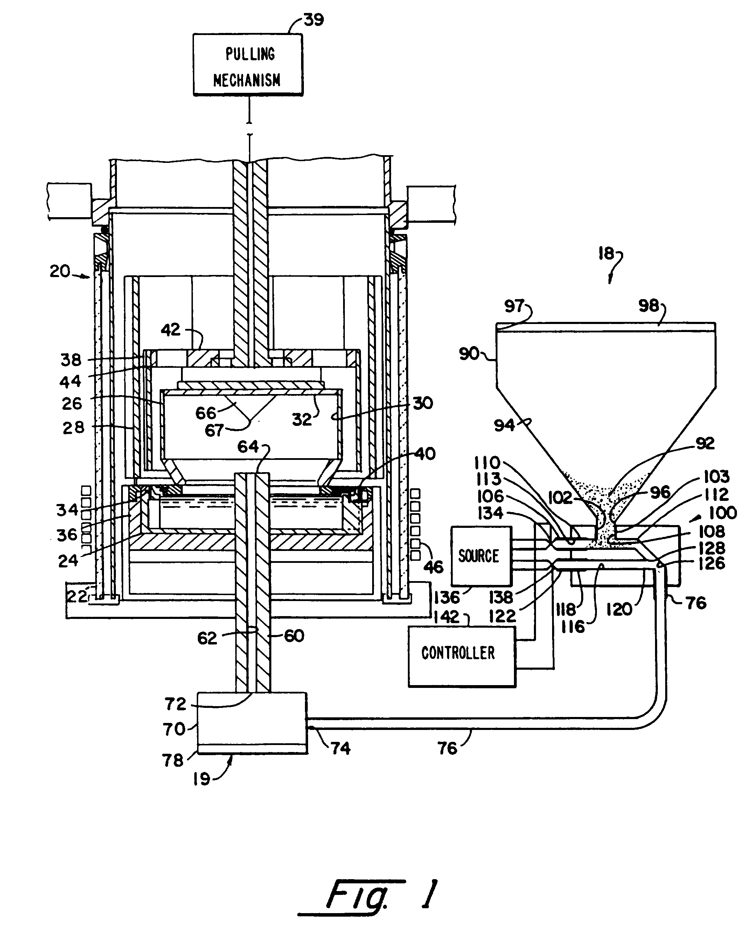

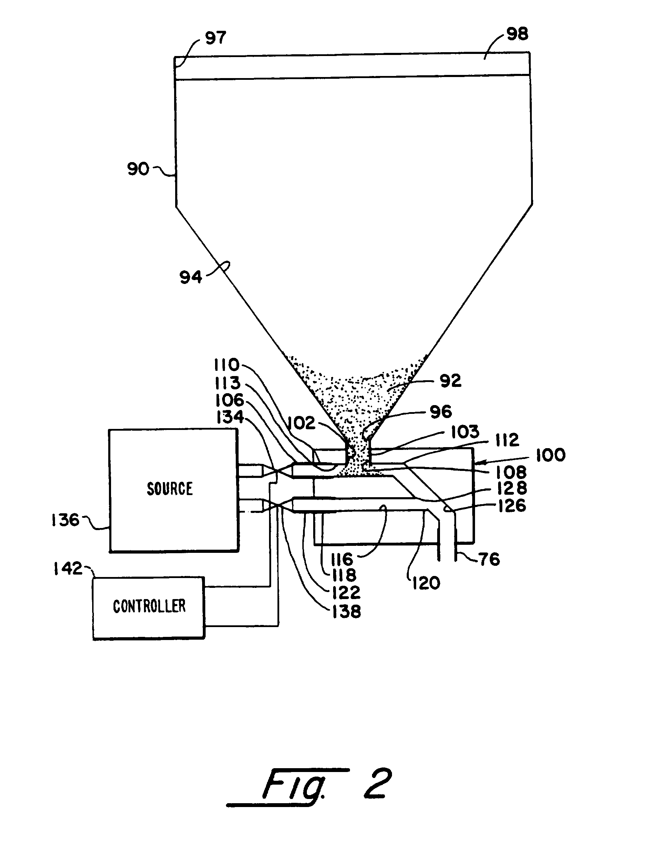

Referring to Figs. 1 and 2, the illustrated apparatus comprises a delivery system 18 constructed according to this invention for supplying spherical, solid silicon particles to a feeder mechanism 19 that in turn transports the particles to the crucible of a furnace apparatus 20 for graving hollow, tubular crystalline bodies. Apparatus 20 preferably is of the type disclosed in U.S. Patent No. 4,544,528 (the '528 patent), which patent is incorporated herein by reference. Feeder mechanism 19 may take various forms. Thus, for example, it may be a mechanism of the type described in U.S. Patent No. 4,661,324, issued April 28, 1987 in the name of Sink et al. (the 324' patent), which patent is also incorporated herein by reference.

By way of background, apparatus 20 (Fig. 1) comprises a furnace enclosure 22 within which are disposed crucible 24, and inner and outer tubular after-heaters 26 and 28. Crucible 24 is a short, hollow, open-topped right prism or right circular cylinder centrally disposed within enclosure 22. Inner after-heater 26 has a hollow interior 30 and a top plate 32 sealing off its top end. The bottom end of inner after-heater 26 is open, and the inner after-heater is positioned directly above crucible 24 whereby interior space 30 of the inner after-heater is coupled with the interior of the crucible. Inner after-heater 26 is located in the hollow interior of outer after-heater 28.

Apparatus 20 additionally comprises a capillary die 34, a susceptor 36 and a seed assembly 38, all of which are positioned in enclosure 22. Preferably, capillary die 34 is an integral part of the sidewall of crucible 24. The shape and dimension of the end face 40 of die 34 are selected to control the form and size of the grown crystal. Susceptor 36 is a short, hollow open-topped cylindrical or prismatic body dimensioned to accommodate crucible 24. Susceptor 36 may be an integral part of the die/crucible assembly. Seed assembly 38 includes a seed holder 42 and a seed 44. Seed assembly 38 is attached to a pulling mechanism 39 which is adapted to move seed holder 47 axially toward and away from die 34.

Apparatus 20 further includes a heating coil 46 surrounding enclosure 22 adjacent crucible 24. Heating coil 46 maintains the silicon in crucible 24 in a molten state.

As is known, the crystalline body is grown by positioning seed 44 in contact with the die end face 40 and then pulling the seed away from the die end face so as to form a meniscus between the seed and the die end face. As the seed is pulled away from the die end face, the portion of the meniscus closest to the seed solidifies. As the seed crystal is pulled even farther away from the die, new molten silicon is drawn by capillary action onto the die end face and molten silicon already present in the meniscus hardens to form crystalline silicon attached to the seed, so as to form an elongate silicon body.

For a more detailed description of the construction and operation of apparatus 20, attention is directed to the '528 patent.

For the purpose of the present invention, apparatus 20 is modified to include a conduit 60 having a central bore 62. Conduit 60 extends through the bottom walls of enclosure 22, susceptor 36 and crucible 24, as shown in Fig. 1. The inside diameter of conduit 60 is slightly greater than the outside diameter of the largest particles of silicon to be supplied by the system 18 of the present invention, as discussed below. Preferably, conduit 60 is made of fused silica. Conduit 60 is positioned in the center of crucible 24 and is sized so that its top end 64 extends up into the interior 30 of inner after-heater 26, above the top surface of the melt supported in crucible 24 when the crucible is full. Conduit 60 provides a passageway from the region below apparatus 20 up through the bottom wall of crucible 24 into the interior 30 of inner after-heater 26. Preferably, a convex conical deflector 66 is attached to the bottom surface of top plate 32 directly above the top end 64 of conduit 60, so that the pointed end 67 of the deflector is coaxially aligned with central bore 62.

In other respects, the crystal growth furnace illustrated in Fig. 1 is identical to the furnace described in the '528 patent.

Feed mechanism 19 comprises hollow storage chamber 70 for receiving and temporarily storing solid, spherical beads of silicon. Storage chamber 70 is positioned directly below the bottom end of conduit 60 and is coupled with the interior of the conduit via an aperture 72 provided in the top wall of the storage chamber. Storage chamber 70 includes an aperture 74 in the sidewall thereof and a supply conduit 76 attached to the sidewall so that the interior of the conduit communicates with the interior of the storage chamber.

Additionally, feed mechanism 19 includes a transporting mechanism 78 for transporting silicon beads from storage chamber 70 up through conduit 60 into the space above the crucible. As noted above, transporting mechanism 78 may comprise a chip thruster of the type disclosed in the '324 patent.
Alternatively, it may comprise a pressurized gas jet feed system or other mechanism, the only requirement being that the mechanism be capable of delivering silicon beads from storage chamber 70 into the crucible in conduit 60 at substantially the same rate that particulate material is provided to the storage chamber 70 by conduit 76.

Turning now to Fig. 2, source material delivery system 18 includes a hollow container 90 for storing particles 92 of solid silicon. The bottom portion of container 90 preferably tapers inwardly and terminates in a bottom aperture 96. Container 90 preferably is open at the top to permit addition of a supply of particles 92, and a removable cover 98 is preferably provided for closing off the top end of the container.

Referring now to Fig. 4, system 18 further includes a manifold 100 attached to conduit 60. Manifold 100 consists of a solid block of material, such as polyethylene, which is hollowed out so as to form a plurality of interconnected passageways. Specifically, manifold 100 includes a vertically-extending hollow bore 102 which is lined with a hollow sleeve 103 which extends up into bottom aperture 96 of container 90, whereby the interior of bore 102 is coupled with interior 94 of container 90. Manifold 100 also includes a horizontally-extending silicon particle receiving chamber 106. The latter intersects and communicates with hollow bore 102. Preferably, hollow sleeve 103 extends down to and is flush with the upper side of receiving chamber 106. Thus, sleeve 103 acts as a delivery tube for transporting particles by gravity from container 90 to chamber 106.

As particles 92 fall into receiving chamber 106 they accumulate in a pile directly beneath bore 102. As more and more silicon particles 92 fall into receiving chamber 106, the pile enlarges until it extends from the bottom wall to the top wall of receiving chamber 106, with the top of the pile having a width about equal to the inside diameter of aperture 108 and the base of the pile having a width which is substantially greater than the width of the top of the pile. Once the pile has assumed this configuration, it blocks the flow of additional silicon particles from container interior 94 to receiving chamber 106.

The inside diameters of bore 102 and sleeve 103 are selected, and the internal configuration and dimensions of receiving chamber 106 are chosen so that, given the fact that the uniform particle shape and the substantially narrow range of particle size automatically determines a particular angle of repose, only a predetermined quantity (volume) of silicon particles 92 can fall from container interior 94 into receiving chamber 106.

As used herein, the slope of the sides of the pile of particles is called the angle of repose. This angle of repose and the size and configuration of silicon particles 92 and the size and configuration of receiving chamber 106 determine the volume of particles accumulating in a pile in receiving chamber 106. Where the size and configuration of silicon particles 92 is known and is substantially constant, a predetermined volume of silicon particles can thus be accumulated in receiving chamber 106 by properly sizing and configuring the latter.

In an exemplary working embodiment of the present invention, where the crystal growth apparatus 20 to which the present source material delivery system 18 was attached consumed molten silicon at the rate of 15g per minute, and silicon particles 92 had a spherical configuration and a diameter of 0.7 millimeter, +/- about 1/2 millimeter, receiving chamber 106 had a circular cross-sectional configuration, with an inside diameter of 5mm, and a length of about 28mm. The pile of silicon particles 92 that accumulated in receiving chamber 106 had an angle of repose of 15°.

Manifold 100 also includes a horizontally-extending bore 116. The latter is open at its ends 118 and 120. Preferably, a hollow sleeve 122 is disposed in end 118 of bore 116. The sleeve 122 is sized so as to project outwardly from manifold 100. A similar sleeve 113 is disposed in the outer end 110 of bore 106.

Manifold 100 additionally includes a transversely-extending inclined bore 126, one end of which is coupled with inner end 112 of receiving chamber 106 and the other end of which is coupled to supply conduit 76. By this coupling, receiving chamber 106 is coupled by conduit 76 to feed mechanism 19, and ultimately to the interior of apparatus 20. Bore 126 is intersected at 128 by the inner end 120 of bore 116, whereby the interior of bore 116 communicates with the interior of bore 126.

Feed system 18 additionally includes a valve 134 which connects sleeve 113 to a source 136 of pressurized fluid, typically an inert gas such as argon. System 18 also includes a valve 138 which connects sleeve 122 to gas source 136. Valves 134 and 138 are designed to selectively feed gas from source 136 to receiving chamber 106 and bore 116, respectively. Preferably, valves 134 and 138 are electrically operated, so that when an "open" control signal is provided to the valves they open and thereby admit a stream of pressurized fluid to the chamber or bore to which they are attached, and when a "close" control signal is provided to the valves they close and thereby terminate flow of pressurized fluid to the chamber or bore to which they are attached.

The volume flow rates of the pressurized fluid introduced from source 136 into receiving chamber 106 and bore 116 by operation of valves 134 and 138, respectively, is selected so as to ensure that all of particles 92 present in receiving chamber 106 are entrained in the stream of pressurized fluid supplied via valve 134 carried into bore 126, and are carried from bore 126 into and through supply conduit 76 as a result of entrapment in the gas stream introduced via operation of valve 138. Of course, the specific volume flow rates of the pressurized fluid passed by valves 134 and 138 will vary depending upon the size and configuration of particles 92 and the size and configuration of the receiving chamber and bores in 102, 106, 116 and 126 manifold 100.

In the working embodiment of system 18, source 136 provided argon gas at a pressure of about 100 pounds per square inch absolute, and opening of valves 134 and 138 caused gas to flow in the last of bores 106 and 116 respectively at a volume flow rate of about 5 liters STP (i.e., a temperature of 25 degrees C and an atmospheric pressure of 960 mm Hg) per minute. Spherical silicon particles having an outside diameter of about 0.7 millimeter, plus or minus about 1/2 millimeter, were used as the feed material.

Feed system 18 preferably includes a controller 142 coupled to valves 134 and 138 for providing the "open" and "close" control signals to valves 134 and 138. Controller 142 may, for example, consist of a conventional programmable industrial process control digital computer. As described in greater detail below in connection with the description of the operation of the feed system 18 of the present invention, controller 142 is programmed so as to automatically control the opening and closing of valves 134 and 138 so that when one of the valves is opened, the other of the valves is closed, and vice versa.

In connection with the following description of the operation of the feed system 18 of the present invention, reference should be made to Figs. 1-5.

With valves 134 and 138 both closed, free-flowing silicon particles 92 are added to the interior 94 of the container. Preferably, particles 92 are spherical in configuration and have an outside diameter of about 0.7 millimeter, plus or minus about 1/2 millimeter.

Due to the pull of gravity, particles 92 pass through sleeve 103 into receiving chamber 106. As described above, receiving chamber 106 is sized and configured so that as the particles drop and accumulate in a pile having a shape determined by the angle of repose, only a predetermined quantity of particles can accumulate in receiving chamber 106, the particles coacting with the sidewalls of receiving chamber 106 so as to limit the volume of particles that can accumulate in a pile in receiving chamber 106.

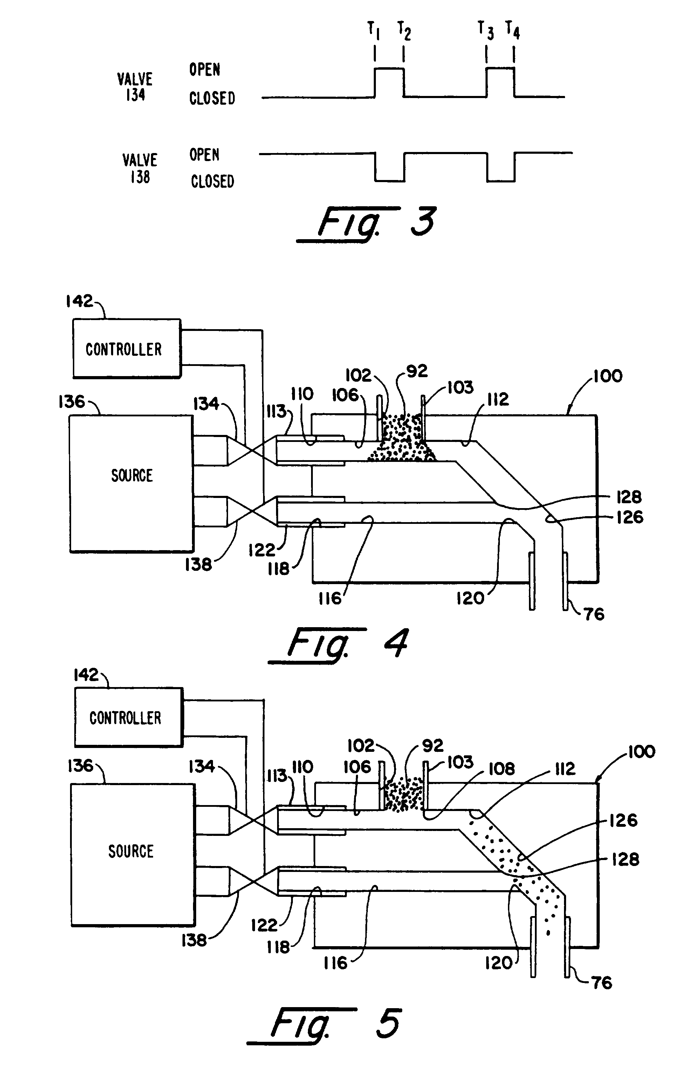

Then at time T1 (Fig. 3), controller 142 is activated, whereupon it sends a control "open" signal to valve 134, which causes the valve to open. At the same time, controller 142 sends a control signal to valve 138 which causes the valve to close (or to remain closed if it is already in that state). The pressurized fluid in receiving chamber 106 forces the pile of particles 92 which has accumulated therein out of the receiving chamber and into bore 126. This operational state of feed system is illustrated in Fig. 5.

Valve 134 is opened only long enough to permit the stream of Pressurized fluid generated by source 136 to dispense the particles 92 in receiving chamber 106 from the latter into bore 126. As such, a pulse of pressurized fluid rather than an ongoing, continuous stream of pressurized fluid is provided to receiving chamber 106. After the pile of particles 92 has been dispensed from receiving chamber 106 and before more particles have fallen from container 90 into receiving chamber 106, controller 142 sends a control "close" signal to valve 134 which causes the valve to close. This control signal is sent at time T2 as illustrated in Fig. 3.

Also at time T2, controller 142 sends a control "open" signal to valve 138 which causes the valve to open. Once valve 138 is open, a stream of pressurized fluid from source 136 travels through bore 116 and into bore 126 where it entrains the particles which were moved into bore 126 by the opening of valve 134.

These entrained particles are then transported by the stream of pressurized fluid into and through supply conduit 76 to storage chamber 70 of feed mechanism 19. Then, feed mechanism 19 transports the particles 92 from chamber 70 through conduit 60 into the interior of inner-after heater 26. The particles discharged into conduit 60 continue to travel upwardly within the inner after-heater 26 until they contact and bounce off deflector 66, if provided, and fall into the melt. Deflector 66 evenly distributes particles 92 so they enter the melt over substantially the entire surface thereof, thereby minimizing the formation of locally cool zones which can give rise to currents and thermal excursions in the melt which can adversely affect the crystal growth process. Where deflector 66 is not provided, particles 92 merely bounce off the bottom surface of plate 32 and fall into the melt. In certain cases, acceptable results can be obtained without the use of deflector 66.

As soon as valve 134 is closed, i.e. immediately after time T2, particles 92 begin again to accumulate in receiving chamber 106 until a predetermined quantity of particles has accumulated. This accumulation occurs between time T2 and time T3 (Fig. 3). At time T3, controller 142 provides a control "open" signal to valve 134 which causes the latter to open and a control "close" signal to valve 138 which causes the latter to close. As described above, the particles in receiving chamber 106 are transported into bore 126 by the pressurized fluid supplied to receiving chamber 106. At time T4, controller 142 provides control signals which cause valve 134 to close and valve 138 to open, whereby the particles 92 in bore 126 are transported to feed mechanism 19, as described above. This sequence of opening and closing valves 134 and 138 is repeated during the crystal growth process.

The length of time between the closing and opening of valve 134, i.e. the time between T2 and T3, is selected based on the rate at which molten silicon is consumed by apparatus 20 in growing a crystalline body. Controller 142 may be programmed so that the time period between the closing and opening of valve 134 is fixed, based on empirical data regarding the rate at which apparatus 20 consumes molten silicon. Alternatively, controller 142 may be programmed to vary the time period between the closing and opening of valve 134 based on information regarding the change in weight of the growing crystalline body generated concurrently with the growth of the body. Using this information, controller 142 will cause valves 134 and 138 to open and close so as to ensure that the quantity of silicon particles 92 provided to apparatus 20 is substantially equal to the quantity of silicon consumed by the apparatus.

The frequency at which valves 134 and 138 are opened and closed is based on the assumption that the quantity of silicon particles which accumulates in receiving chamber 106 is substantially constant. As discussed above, receiving chamber 106 is designed to ensure that a selected substantially constant quantity of particles 92 accumulates in the receiving chamber. The specific size and configuration of receiving chamber 106 and hence the size of the pile of particles 92 which can accumulate in receiving chamber 106 are chosen on the basis of empirical data regarding the quantity of silicon particles which can be added to the melt in crucible 24 of apparatus 20 without causing unacceptable large thermal perturbations in the melt.

In an exemplary embodiment of the present invention, valve 134 is open for about 0.01 seconds, and valve 134 is closed for a time period ranging from 1.4 seconds to 3.0 seconds. In this embodiment, receiving chamber 106 was sized and configured so that about 0.5g of solid spherical silicon particles having an average diameter of about 0.7mm +/- about 1/2 millimeter accumulated in the receiving chamber.

It is preferred that one of valves 134 and 138 be open at all times during the operation of source material delivery system 18 to ensure that a reasonably constant gas flow is provided from the delivery system 18, through feed mechanism 19, and into the interior of inner-after heater 26. Such a gas flow is desirable to avoid the deleterious affects of pressure surges in the cryal growth region. Such surges can, for instance, adversely affect the output of the load cell which measures the weight of the growing crystalline body. Because the output of the load cell is used in controlling the crystal growth process, when erroneous information is provided by the load cell the crystal growth process may be adversely affected.

However, in certain circumstances a continuous stream of gas need not be provided from the delivery system to the crystal growth region. Under these circumstances, valve 138 is opened only long enough to transport particles 92 in bore 126 to feed mechanism 19. Alternatively, it may be possible in certain situations to eliminate valve 138 and bore 116. In this case, the pressurized fluid provided to receiving chamber 106 transports the particles 92 into and through bore 126, into supply conduit 76 and through the latter into storage chamber 70 in feed mechanism 19.

Although source material delivery system 18 has been described as a system for delivering solid spherical silicon particles to the feed mechanism 19 of a crystal growth apparatus 20, the system may be satisfactorily employed in other contexts where it is desired to transport a predetermined quantity of a uniform particulate material from a storage container to a downstream location. For instance, system 18 may be used in a pharmaceutical manufacturing process where it is desired to transport a predetermined quantity of a first compound in a particulate form to a downstream location where it is combined with a second compound in particulate form. Where system 18 is used in other manufacturing contexts and the size, configuration, and material of the particles being used differs from that of the silicon particles 92 used in the preferred configuration of this invention, the size of receiving chamber 106 must be selected so that the quantity of particles which can accumulate therein is equal to the quantity of particles which is to be delivered to the downstream location.

Additionally, it may be necessary or desirable to modify the pressure of gas source 136 to ensure that the particles being transported are completely entrained in the pressurized gas and are carried by that gas to the selected downstream location. Where non-spherical particles are used, it is important that the particles either be very small, e.g. no more than about 1/20 the diameter of receiving chamber 106, or have an L/D aspect ratio not greater than 3 to 1 (where L is the length and D is the diameter of the particle).

An important advantage of the present invention is that the quantity of silicon particles 92 which is provided to feed mechanism 19, and hence to the melt in crucible 24 of apparatus 20 can be precisely controlled. As a result, the physical and electrical properties of the crystalline body grown with apparatus 20 can be optimized.

Another important advantage of the present invention is that the silicon particles 92 delivered by system 18 do not come into contact with any moving parts or any metallic components during their transport to feed mechanism 19, assuming container 70, manifold 100, and supply conduit 76 are made from non-metallic materials. By avoiding the use of moving parts which tend to wear away due to mechanical interaction between parts, and by avoiding the use of metallic part which can be abraded away by the abrasive silicon particles 92, the introduction of contaminants into the particles feed system and hence into the silicon melt is minimized. This is a very important consideration in the manufacture of silicon substrates for use in making semiconductor devices, e.g., photovoltaic solar cells, since only a few parts per million of undersirable contaminants can adversely affect device performance.

Since certain changes may be made in the above apparatus and method without departing from the scope of the invention herein involved, it is intended that all matter contained in the above description or shown in the accompanying drawing shall be interpreted in an illustrative and not in a limiting sense.

## Claims

1. Apparatus (20) for growing hollow, tubular, crystalline bodies comprising a furnace (22), a crucible (24) for containing a melt of silicon, said crucible having a bottom end wall and an opening in said bottom end wall, a hollow pipe (60) extending through said bottom end wall and terminating above said crucible, and a feed mechanism for transporting a predetermined quantity of silicon particles (92) at certain intervals to said crucible as replacement material for that withdrawn to grow said tubular bodies, said silicon particles being transported through said hollow pipe and ejected from the top end of said hollow pipe so that said particles will fall by gravity back into said crucible, characterized in that said feed mechanism comprises:
(a) storage means comprising a container (90) for storing said silicon particles, said container having a tapered bottom section (94) leading to a discharge orifice (96);
(b) a receiving chamber (106) positioned below said storage means in communication with its discharge orifice (96) so that a continuous flow of silicon particles moves from said storage means to said receiving chamber under the pull of gravity;
(c) the inside diameter of said orifice and the internal circular cross-sectional configuration and inside diameter of said receiving chamber being such that said silicon particles accumulate in said receiving chamber in a loosely-formed pile, said pile accumulating up to said discharge orifice so that said pile consists of a predetermined quantity of said silicon particles;
(d) first (126) and second (116) conduits, said first conduit being connected at one end to said chamber and downstream thereof to a third conduit (76), said first conduit providing a first passageway for said silicon particles from said receiving chamber to said third conduit, said second conduit (116) providing a second passageway intersecting said first passageway, and said third conduit providing a third passageway for said silicon particles to said hollow pipe;
(e) first fluid delivery means (134, 113) coupled to said receiving chamber for providing a first stream of a pressurized gaseous fluid to said receiving chamber so as to displace said pile of silicon particles from said receiving chamber to the region of said first passageway where said second passageway intersects said first passageway; and
(f) second fluid delivery means (138, 122) coupled directly to said second conduit for providing a second stream of a pressurized gaseous fluid through said second passageway to said first passageway so as to entrain said silicon particles in said first passageway and transport said entrained silicon particles through said third passageway to said pipe.

2. Apparatus according to claim 1 wherein said orifice (96) is coupled to the upper end of a downwardly extending hollow sleeve (103) so as to define a fourth passageway extending downwardly from said storage means, and said receiving chamber is coupled to the lower end of said hollow sleeve so that said fourth passageway is in communication with said receiving chamber.

3. Apparatus according to claim 2 wherein said pile of silicon particles extends from the floor of said receiving chamber in conical fashion to the lower end of said hollow sleeve (103) so as to prevent additional silicon particles from entering said chamber until said pile is removed therefrom.

4. Apparatus according to claim 1 wherein said discharge orifice (96) is coupled to the upper end of a downwardly extending hollow sleeve (103), and the lower end of said hollow sleeve is coupled to said chamber (106), the inside diameter of said hollow sleeve and the internal circular cross-sectional configuration and inside diameter of said receiving chamber being related to the particle size and shape of said silicon particles such that said silicon particles accumulate in said receiving chamber in a pile, said pile extending from the floor of said chamber to the lower end of said hollow sleeve so as to prevent additional silicon particles from entering said chamber means until said pile is removed, whereby said pile consists of a predetermined quantity of said silicon particles.

5. Apparatus according to any one of the preceding claims wherein at least a portion of said first conduit (126) is inclined.

6. Apparatus according to any of the preceding claims wherein said first and second fluid delivery means comprises respectively first (134) and second (138) control valve means for starting and stopping said streams of pressurized fluid, so as to permit said streams to flow in discrete pulses of selected duration at selected time intervals.

7. Apparatus according to claim 6 wherein:
said first valve means (134) associated with said first fluid delivery means selectively blocks and unblocks the flow of pressurized fluid to said chamber, so as to cause said fluid to be delivered to said chamber in discrete pulses of selected duration at selected time intervals;
said second valve means (138) associated with said second fluid delivery means selectively blocks and unblocks the flow of pressurized fluid to said second conduit, so as to cause said fluid to be delivered to said second conduit in discrete pulses of selected duration at selected time intervals; and
control means (142) coupled to said first and second valve means for controlling the operation of said first and second valve means so that said first valve means permits pressurized fluid to be delivered only when said second valve means blocks pressurized fluid from being delivered, and vice versa.

8. Apparatus according to claim 7 wherein said control means (142) generates control signals which are transmitted to said first and second valve means, and (a) said first valve means blocks the flow of said first stream of pressurized fluid in response to a first control signal from said control means and unblocks the flow of said first stream of pressurized fluid in response to a second control signal from said control means, and (b) said second valve means blocks the flow of said second stream of pressurized fluid in response to a third control signal from said control means and unblocks the flow of said second stream of pressurized fluid in response to a fourth control signal from said control means.

9. Apparatus according to any one of the preceding claims, wherein said silicon particles are substantially spherical.

10. Apparatus according to claim 9 wherein said receiving chamber (106) is provided within a manifold (100);
(a) said manifold comprising:
(1) a first bore forming said chamber (106) in communication with said discharge orifice in said storage means, said chamber being oriented relative to said discharge orifice such that a predetermined quantity of said spherical silicon particles may flow under the force of gravity into, and be contained in the form of a loose, pile within said chamber;
(2) a second inclined bore (126) forming a sloping passageway which is in communication with said first bore forming said chamber;
(3) a third bore leading from said second bore;
(4) a fourth bore intersecting said second bore and forming said second conduit means (116); and
(b) said third conduit means (76) being connected to the third bore in said manifold so as to define the third passageway which extends from said sloping passageway to said crystal growth apparatus.

11. Apparatus according to any one of the preceding claims wherein the silicon particles have a diameter of about 0.7 millimeter +/- about 1/2 millimeter.

12. Apparatus according to any one of the preceding claims wherein said fluid is gaseous argon.

13. A method for intermittently feeding, in a free-flowing manner, spherical silicon particles into a crystal growth apparatus (20) for growing a tubular crystalline silicon body, said apparatus comprising a furnace (22), and a crucible (24) for containing a melt of silicon disposed within said furnace;
said method comprising transporting said spherical silicon particles from a storage means (90) to said crystal growth apparatus under gaseous fluid pressure via a passageway means;
wherein said spherical silicon particles are discharged by gravity flow from said storage means through a discharge orifice (96, 103, 108) into a receiving chamber (106), said chamber being so configured and arranged as to permit only a predetermined quantity of said spherical silicon particles to accumulate in the form of a loose pile within said chamber;
said method further including the following steps:
injecting a first stream of pressurized fluid into said chamber so as to cause said pile of spherical silicon particles to be transferred out of said chamber (106) into a first conduit (126);
injecting a second stream of pressurized fluid into said first conduit (126) so as (i) to entrain said spherical silicon particles in said first conduit in said second stream and (ii) to transfer said entrained spherical silicon particles through a passageway (76) connecting said first conduit and said crystal growth apparatus; and
thereafter repeating the forgoing steps in sequence so that a predetermined quantity of spherical silicon particles is delivered intermittently to said crystal growth apparatus by the application of said first and second streams of pressurized fluid.

14. A method according to claim 13 wherein the crucible (24) of said apparatus for growing tubular crystalline silicon bodies has a bottom end wall and an opening in said bottom end wall, the apparatus further having a hollow pipe (60) extending through said bottom end wall and terminating above said crucible, and a feed mechanism (19) for transporting said spherical silicon particles through said hollow pipe and ejecting said spherical silicon particles from the top end of said hollow pipe so that said spherical silicon particles will fall by gravity back into said crucible, the discharge orifice (96, 103, 108) of said storage means (90) being downwardly facing and the crystal growing apparatus also including a particle transport means comprising a source of pressurized fluid (136), first pressurized fluid delivery means including first valve means (134) connected to said passageway means downstream of said orifice, and a second pressurized fluid delivery means including second valve means (138) connected to said passageway means downstream from said first fluid delivery means, said first and second valve means being controlled by a control means; wherein
(1) said steps of injecting streams of pressurized fluid are alternately performed at preselected intervals;
(2) said particle transport means further having:
(i) a first conduit (126) connected at one end to said chamber and at its other end to one end of a third conduit (76) so as to define a first passageway extending between said chamber and said third conduit; and a second conduit (116) defining a second passageway which intersects said first passageway intermediate the opposite ends of said first conduit; the other end of said third conduit being connected to the lower end of said feed mechanism so as to define a third passageway (76) between said first passageway and said feed mechanism;
(ii) first fluid delivery means (136, 134) for supplying a first stream of pressurized gaseous fluid from said storage means to said chamber; and
(iii) second fluid delivery means (136, 138) for providing a second stream of a pressurized gaseous fluid to said second passageway.

15. A method according to claim 14 including operating said control means to sequentially:
(1) close said second valve means (138) and open said first valve means (134) so as to permit said first stream of pressurized fluid to flow into said first conduit, thereby removing said predetermining quantity of spherical silicon particles from said chamber and entraining said spherical silicon particles into said first conduit; and
(2) close said first valve means (134) and open said second valve means (138) so as to permit said second stream of pressurized fluid to flow into said first conduit downstream of said first stream of pressurized fluid and thereafter into said third conduit in order to transport said spherical silicon particles through said third conduit to the feed mechanism of said crystal growth apparatus.

16. A method according to claim 15 including setting the timing of the control means so that the period of time between the opening of said first control valve means (134) and the closing of said first control valve means (134) permits said first stream of pressurized fluid to entrain said predetermined quantity of spherical silicon particles in said chamber (106) and to transport said predetermined quantity of spherical silicon particles in entrained particle form into said first passageway before any further substantial quantity of said spherical silicon particles can pass under the force of gravity from said storage means (90) into said chamber.

## Patentansprüche

1. Vorrichtung (20) zur Zucht hohler, rohrförmiger Kristallkörper, mit einem Ofen (22), einem Schmelztiegel (24), der eine Siliziumschmelze enthält, wobei der Schmelztiegel eine Bodenendwand und eine Öffnung in der Bodenendwand aufweist, ein Hohlrohr (60), welches durch die Bodenendwand verläuft und über dem Schmelztiegel endet, und eine Zuführeinrichtung, um eine vorherbestimmte Menge an Siliziumteilchen (92) in bestimmten Intervallen zu dem Schmelztiegel als Ersatzmaterial für das zur Zucht der rohrförmigen Körper abgeführte Material zu befördern, wobei die Siliziumteilchen durch das hohle Rohr befördert und vom obersten Ende des hohlen Rohres ausgestoßen werden, so daß die Teilchen unter Schwerkraftwirkung zurück in den Schmelztiegel fallen, dadurch gekennzeichnet, daß der Zuführmechanismus folgendes umfaßt:
(a) eine Lagervorrichtung mit einem Behälter (90) zum Lagern der Siliziumteilchen, wobei der Behälter einen sich verjüngenden Bodenabschnitt (94) hat, der zu einer Auslaßöffnung (96) führt;
(b) eine Aufnahmekammer (106), die unterhalb der Lagervorrichtung in Verbindung mit dessen Auslaßöffnung (96) angeordnet ist, so daß sich ein kontinuierlicher Fluß von Siliziumteilchen unter Schwerkrafteinwirkung von der Lagervorrichtung zu der Aufnahmekammer bewegt;
(c) der Innendurchmesser der Öffnung und die Anordnung mit innerem kreisförmigen Querschnitt und der Innendurchmesser der Aufnahmekammer derart gewählt sind, daß sich die Siliziumteilchen in der Aufnahmekammer in einem lose geformten Häufchen ansammeln, wobei das Häufchen sich bis zur Auslaßöffnung ansammelt, so daß das Häufchen aus einer vorbestimmten Menge der Siliziumteilchen besteht;
(d) eine erste (126) und eine zweite Leitung (116), wobei die erste Leitung an einem Ende mit der Kammer und in Flußrichtung gesehen nach dieser mit einer dritten Leitung (76) verbunden ist, wobei die erste Leitung einen ersten Durchlaß für die Siliziumteilchen von der Aufnahmekammer zu der dritten Leitung bildet, die zweite Leitung (116) einen zweiten Durchlaß bildet, der den ersten Durchlaß schneidet, und die dritte Leitung einen dritten Durchlaß für die Siliziumteilchen zum hohlen Rohr bildet;
(e) eine erste Zuleitungsvorrichtung (134, 113) für ein Fluid, die mit der Aufnahmekammer verbunden ist, um einen ersten Strom eines unter Druck stehenden gasförmigen Fluids zur Aufnahmekammer zu verschieben, um das Häufchen Siliziumteilchen aus der Aufnahmekammer in den Bereich des ersten Durchlasses zu leiten, wo der zweite Durchlaß den ersten Durchlaß schneidet; und
(f) eine zweite Zuleitungsvorrichtung (138, 122) für ein Fluid, welche direkt mit der zweiten Leitung gekoppelt ist, um einen zweiten Strom eines unter Druck stehenden gasförmigen Fluids durch den zweiten Durchlaß an den ersten Durchlaß zu leiten, um die Siliziumteilchen in den ersten Durchlaß mitzuführen und die mitgeführten Siliziumteilchen durch den dritten Durchlaß zum Rohr zu befördern.

2. Vorrichtung nach Anspruch 1, wobei die Öffnung (96) mit dem oberen Ende eines nach unten verlaufenden hohlen Kurzrohres (103) verbunden ist, so daß ein vierter Durchlaß gebildet wird, welcher von der Lagervorrichtung nach unten verläuft, und die Aufnahmekammer mit dem unteren Ende des hohlen Kurzrohres verbunden ist, so daß der vierte Durchlaß mit der Aufnahmekammer in Verbindung steht.

3. Vorrichtung nach Anspruch 2, wobei das Häufchen Siliziumteilchen vom Boden der Aufnahmekammer konisch zum unteren Ende des hohlen Kurzrohrs (103) verläuft, um weitere Siliziumteilchen am Eintritt in die Kammer zu hindern, bis das Häufchen daraus entfernt ist.

4. Vorrichtung nach Anspruch 1, wobei die Auslaßöffnung (96) mit dem oberen Ende eines nach unten verlaufenden hohlen Kurzrohrs (103) gekoppelt ist, und das untere Ende des hohlen Kurzrohrs mit der Kammer (106) verbunden ist, wobei der Innendurchmesser des hohlen Kurzrohrs und die Anordnung mit innerem kreisförmigen Querschnitt und der Innendurchmesser der Aufnahmekammer derartig auf die Teilchengröße und Form der Siliziumteilchen bezogen sind, daß sich die Siliziumteilchen in der Aufnahmekammer in Form eines Häufchens ansammeln, wobei das Häufchen vom Boden der Kammer zum unteren Ende des hohlen Kurzrohrs verläuft, um weitere Siliziumteilchen am Eintritt in die Kammervorrichtung zu hindern, bis das Häufchen daraus entfernt ist, wodurch das Häufchen aus einer vorbestimmten Menge der Siliziumteilchen besteht.

5. Vorrichtung nach einem der vorhergehenden Ansprüche, wobei wenigstens ein Teil der ersten Leitung (126) geneigt ist.

6. Vorrichtung nach einem der vorhergehenden Ansprüche, wobei die erste und die zweite Zuleitungsvorrichtung für das Fluid jeweils eine erste (134) und eine zweite Steuerventilvorrichtung (138) umfassen, um die Ströme des unter Druck stehenden Fluids ein- und auszuschalten, damit diese Ströme in einzelnen Impulsen von ausgewählter Dauer zu ausgewählten Zeitintervallen fließen können.

7. Vorrichtung nach Anspruch 6, wobei:
die erste Ventilvorrichtung (134), die der ersten Zuleitungsvorrichtung für das Fluid zugeordnet ist, den Strom des unter Druck stehenden Fluids an die Kammer selektiv blockiert und freigibt, um zu bewirken, daß das Fluid in einzelnen Impulsen einer ausgewählten Dauer zu ausgewählten Zeitintervallen an die Kammer geleitet wird;
die zweite Ventilvorrichtung (138), die der zweiten Zuleitungsvorrichtung für das Fluid zugeordnet ist, den Strom des unter Druck stehenden Fluids an die zweite Leitung selektiv blockiert und freigibt, um zu bewirken, daß das Fluid in einzelnen Impulsen einer ausgewählten Dauer zu ausgewählten Zeitintervallen an die zweite Leitung geleitet wird; und
eine Steuervorrichtung (142) mit der ersten und der zweiten Ventilvorrichtung gekoppelt ist, um den Betrieb der ersten und der zweiten Ventilvorrichtung derart zu steuern, daß die erste Ventilvorrichtung nur dann eine Zuleitung des unter Druck stehenden Fluids zuläßt, wenn die zweite Ventilvorrichtung die Zuleitung des unter Druck stehenden Fluids blockiert, und umgekehrt.

8. Vorrichtung nach Anspruch 7, wobei die Steuervorrichtung (142) Steuersignale erzeugt, die an die erste und die zweite Ventilvorrichtung übertragen werden, und (a) die erste Ventilvorrichtung den Fluß des ersten Stroms des unter Druck stehenden Fluids als Reaktion auf ein erstes Steuersignal von der Steuervorrichtung blockiert und den Fluß des ersten Stroms des unter Druck stehenden Fluids als Reaktion auf ein zweites Steuersignal von der Steuervorrichtung freigibt, und (b) die zweite Ventilvorrichtung den Fluß des zweiten Stroms des unter Druck stehenden Fluids als Reaktion auf ein drittes Steuersignal von der Steuervorrichtung blockiert und den Fluß des zweiten Stroms des unter Druck stehenden Fluids als Reaktion auf ein viertes Steuersignal von der Steuervorrichtung freigibt.

9. Vorrichtung nach einem der vorhergehenden Ansprüche, wobei die Siliziumteilchen im wesentlichen kugelförmig sind.

10. Vorrichtung nach Anspruch 9, wobei die Aufnahmekammer (106) innerhalb einem Verteiler (100) vorgesehen ist;
(a) wobei der Verteiler (100) folgendes umfaßt:
(1) eine erste Bohrung, die die Kammer (106) in Verbindung mit der Auslaßöffnung in der Lagervorrichtung bildet, wobei die Kammer bezüglich der Auslaßöffnung derart ausgerichtet ist, daß eine vorbestimmte Menge der kugelförmigen Siliziumteilchen unter Schwerkrafteinwirkung in die Kammer fließen kann und darin in Form eines losen Häufchens enthalten sind;
(2) eine zweite geneigte Bohrung (126), die einen abfallenden Durchlaß bildet, der mit der ersten, die Kammer bildenden Bohrung in Verbindung steht;
(3) eine dritte Bohrung, die von der zweiten Bohrung abführt;
(4) eine vierte Bohrung, die die zweite Bohrung schneidet, und die zweite Zuleitungsvorrichtung (116) bildet; und
(b) wobei die dritte Zuleitungsvorrichtung (76) in im Verteiler derart mit der dritten Bohrung verbunden ist, daß dadurch der dritte Durchlaß gebildet wird, der von dem abfallenden Durchlaß zur Vorrichtung zur Zucht von Kristallen verläuft.

11. Vorrichtung nach einem der vorhergehenden Ansprüche, wobei die Siliziumteilchen einen Durchmesser von ungefähr 0,7 mm +/- ungefähr 0,5 mm haben.

12. Vorrichtung nach einem der vorhergehenden Ansprüche, wobei das Fluid gasförmiges Argon ist.

13. Verfahren zur intermittierenden Zuführung von kugelförmigen Siliziumteilchen im freien Fluß in eine Kristallzuchtvorrichtung (20) zum Züchten eines rohrförmigen kristallinen Siliziumkörpers, wobei die Vorrichtung einen Ofen (22) und einen im Ofen angeordneten Schmelztiegel (24) umfaßt, der eine Siliziumschmelze enthält;
wobei das Verfahren das Befördern der kugelförmigen Siliziumteilchen von einer Lagervorrichtung (90) zu der Kristallzuchtvorrichtung unter Druck eines gasförmigen Fluids über eine Durchlaßvorrichtung umfaßt;
wobei die kugelförmigen Siliziumteilchen unter Schwerkrafteinwirkung von der Lagervorrichtung durch eine Auslaßöffnung (96, 103, 108) in eine Aufnahmekammer (106) fließen, wobei diese Kammer derart konfiguriert und angeordnet ist, daß sich nur eine vorbestimmte Menge der kugelförmigen Siliziumteilchen in Form eines losen Häufchens in der Kammer ansammeln kann;
wobei das Verfahren des weiteren folgende Schritte umfaßt:
Injizieren eines ersten Stroms des unter Druck stehenden Fluids in die Kammer, um zu bewirken, daß das Häufchen kugelförmiger Siliziumteilchen aus der Kammer (106) heraus in eine erste Leitung (126) befördert wird;
Injizieren eines zweiten Stromes des unter Druck stehenden Fluids in die erste Leitung (126), um (i) die kugelförmigen Siliziumteilchen in der ersten Leitung im zweiten Strom mitzuführen, und (ii) die mitgeführten kugelförmigen Siliziumteilchen durch einen Durchlaß (76), der die erste Leitung mit der Kristallzuchtvorrichtung verbindet, zu befördern; und
anschließendes Wiederholen der vorhergehenden Schritte in ihrer Reihenfolge, so daß eine vorbestimmte Menge kugelförmiger Siliziumteilchen unter Einwirkung des ersten und des zweiten Stroms des unter Druck stehenden Fluids intermittierend der Kristallzuchtvorrichtung zugeführt wird.

14. Verfahren nach Anspruch 13, wobei der Schmelztiegel (24) der Vorrichtung zur Zucht rohrförmiger kristalliner Siliziumkörper eine Bodenendwand und eine Öffnung in der Bodenendwand aufweist, die Vorrichtung des weiteren ein Hohlrohr (60) aufweist, welches durch die Bodenendwand verläuft und über dem Schmelztiegel endet, sowie einen Zuführmechanismus (19) zum Befördern der kugelförmigen Siliziumteilchen durch das hohle Rohr und zum Ausstoßen der kugelförmigen Siliziumteilchen vom obersten Ende des hohlen Rohres, so daß die kugelförmigen Siliziumteilchen unter Schwerkrafteinwirkung zurück in den Schmelztiegel fallen, wobei die Auslaßöffnung (96, 103, 108) der Lagervorrichtung (90) nach unten gerichtet ist und die Kristallzuchtvorrichtung auch eine Teilchenbefördervorrichtung aufweist, die umfaßt: eine Quelle eines unter Druck stehenden Fluids (136), eine erste Zuleitungsvorrichtung für das unter Druck stehende Fluid mit einer ersten Ventilvorrichtung (134), die mit der Durchlaßvorrichtung in Flußrichtung gesehen unterhalb der Öffnung verbunden ist, und eine zweite Zuleitungsvorrichtung für das unter Druck stehende Fluid mit einer zweiten Ventilvorrichtung (138), die mit der Durchlaßvorrichtung in Flußrichtung gesehen unterhalb der ersten Zuleitungsvorrichtung für das Fluid verbunden ist, wobei die erste und die zweite Ventilvorrichtung von einer Steuervorrichtung gesteuert werden; wobei
(1) die Schritte des Injizierens von Strömen des unter Druck stehenden Fluids abwechselnd zu im voraus gewählten Intervallen durchgeführt werden;
(2) die Teilchenbeförderungsvorrichtung des weiteren enthält:
(i) eine erste Leitung (126), die an einem Ende mit der Kammer und an ihrem anderen Ende mit einem Ende einer dritten Leitung (76) verbunden ist, um einen ersten Durchlaß zu bilden, der zwischen der Kammer und der dritten Leitung verläuft; und eine zweite Leitung (116), die einen zweiten Durchlaß bildet, welcher den ersten Durchlaß zwischen den gegenüberliegenden Enden der ersten Leitung schneidet; wobei das andere Ende der dritten Leitung mit dem unteren Ende des Zuführmechanismusses verbunden ist, um einen dritten Durchlaß (76) zwischen dem ersten Durchlaß und dem Zuführmechanismus zu bilden;
(ii) eine erste Zuleitungsvorrichtung (136, 134) für das Fluid zur Zuführung eines ersten Stroms eines unter Druck stehenden gasförmigen Fluids von der Lagervorrichtung zur Kammer; und
(iii) eine zweite Zuleitungsvorrichtung (136, 138) für das Fluid, zur Bereitstellung eines zweiten Stroms eines unter Druck stehenden gasförmigen Fluids in den zweiten Durchlaß.

15. Verfahren nach Anspruch 14, einschließlich dem Betreiben der Steuervorrichtung, um der Reihe nach folgende Schritte vorzunehmen:
(1) Schließen der zweiten Ventilvorrichtung (138) und Öffnen der ersten Ventilvorrichtung (134), damit der erste Strom des unter Druck stehenden Fluids in die erste Leitung fließen kann, wodurch die vorbestimmte Menge der kugelförmigen Siliziumteilchen aus der Kammer entfernt und diese kugelförmigen Siliziumteilchen in die erste Leitung mitgeführt werden; und
(2) Schließen der ersten Ventilvorrichtung (134) und Öffnen der zweiten Ventilvorrichtung (138), damit der zweite Strom des unter Druck stehenden Fluids in die erste Leitung in Flußrichtung gesehen unterhalb des ersten Stroms des unter Druck stehenden Fluids und anschließend in die dritte Leitung fließen kann, um die kugelförmigen Siliziumteilchen durch die dritte Leitung zum Zuführmechanismus der Kristallzuchtvorrichtung zu befördern.

16. Verfahren nach Anspruch 15, welches den Schritt des Einstellens der Zeitsteuerung der Steuervorrichtung einschließt, so daß es während der Zeitperiode zwischen dem Öffnen der ersten Steuerventilvorrichtung (134) und dem Schließen der ersten Steuerventilvorrichtung (134) möglich ist, daß der erste Strom des unter Druck stehenden Fluids die vorbestimmte Menge kugelförmiger Siliziumteilchen in der Kammer (106) mitführen kann und die vorbestimmte Menge kugelförmiger Siliziumteilchen in mitgeführter Teilchenform in den ersten Durchlaß befördern kann, ehe jedwede weitere wesentliche Menge der kugelförmigen Siliziumteilchen unter Schwerkrafteinwirkung von der Lagervorrichtung (90) in die Kammer fließen kann.

## Revendications

1. Appareil (20) de croissance de corps cristallins, tubulaires, creux, comportant un four (22), un creuset (24) destiné à contenir un produit fondu constitué de silicium, ledit creuset ayant une paroi d'extrémité formant fond et une ouverture située dans ladite paroi d'extrémité formant fond, un tuyau creux (60) s'étendant à travers ladite paroi d'extrémité formant fond et se terminant au-dessus dudit creuset, et un mécanisme d'acheminement destiné à transporter une quantité prédéterminée de particules de silicium (92) à certains intervalles de temps vers ledit creuset en tant que matériau de remplacement de celui retiré pour la croissance desdits corps tubulaires, lesdites particules de silicium étant transportées à travers ledit tuyau creux et éjectées à partir de l'extrémité supérieure dudit tuyau creux de sorte que lesdites particules retombent dans ledit creuset du fait de la gravité, caractérisé en ce que le mécanisme d'acheminement comporte :
(a) des moyens de stockage comportant un conteneur (90) destiné à stocker lesdites particules de silicium, ledit conteneur ayant un tronçon formant fond conique (94) aboutissant à un orifice de décharge (96),
(b) une chambre de réception (106) positionnée en dessous desdits moyens de stockage communiquant avec l'orifice de décharge (96) de ceux-ci de sorte qu'un écoulement continu de particules de silicium se déplace à partir desdits moyens de stockage vers ladite chambre de réception sous la traction de la gravité,
(c) le diamètre intérieur dudit orifice et la configuration intérieure circulaire en coupe et le diamètre intérieur de ladite chambre de réception étant tels que lesdites particules de silicium s'accumulent dans ladite chambre de réception en un tas formé de manière lâche, ledit tas s'accumulant vers le haut jusqu'audit orifice de décharge de sorte que ledit tas est constitué d'une quantité prédéterminée de particules de silicium,
(d) un premier (126) et un deuxième (116) conduits, ledit premier conduit étant relié, au niveau d'une première extrémité, à ladite chambre, et, en aval de celle-ci, à un troisième conduit (76), ledit premier conduit fournissant un premier passage pour lesdites particules de silicium à partir de ladite chambre de réception vers ledit troisième conduit, ledit deuxième conduit (116) fournissant un deuxième passage se recoupant avec ledit premier passage, et ledit troisième conduit fournissant un troisième passage pour lesdites particules de silicium vers ledit tuyau creux,
(e) des premiers moyens de distribution de fluide (134, 113) reliés à ladite chambre de réception pour fournir un premier courant de fluide gazeux sous pression vers ladite chambre de réception de manière à déplacer ledit tas de particules de silicium à partir de ladite chambre de réception vers la zone dudit premier passage où ledit deuxième passage recoupe ledit premier passage, et
(f) des seconds moyens de distribution de fluide (138, 122) reliés directement audit deuxième conduit pour fournir un second courant de fluide gazeux sous pression à travers ledit deuxième passage vers ledit premier passage de manière à entraîner lesdites particules de silicium dans ledit premier passage et à transporter lesdites particules de silicium à travers ledit troisième passage allant vers ledit tuyau.

2. Appareil selon la revendication 1, dans lequel ledit orifice (96) est relié à l'extrémité supérieure d'un manchon creux (103) s'étendant vers le bas de manière à définir un quatrième passage s'étendant vers le bas à partir desdits moyens de stockage, et ladite chambre de réception est reliée à l'extrémité inférieure dudit manchon creux de sorte que ledit quatrième passage est en communication avec ladite chambre de réception.

3. Appareil selon la revendication 2, dans lequel ledit tas de particules de silicium s'étend à partir du plancher de ladite chambre de réception d'une manière conique vers l'extrémité inférieure dudit manchon creux (103) de manière à empêcher l'entrée de particules de silicium supplémentaires dans ladite chambre jusqu'à ce que ledit tas soit enlevé de celle-ci.

4. Appareil selon la revendication 1, dans lequel ledit orifice de décharge (96) est relié à l'extrémité supérieure d'un manchon creux (103) s'étendant vers le bas, et l'extrémité inférieure dudit manchon creux est reliée à ladite chambre (106), le diamètre intérieur dudit manchon creux et la configuration en coupe circulaire intérieure et le diamètre intérieur de ladite chambre de réception est fonction de la dimension et de la forme desdites particules de silicium de telle sorte que lesdites particules de silicium sont accumulées dans ladite chambre de réception sous forme d'un tas, ledit tas s'étendant à partir du plancher de ladite chambre vers l'extrémité inférieure dudit manchon creux de manière à empêcher l'entrée de particules de silicium supplémentaires dans lesdits moyens formant chambre jusqu'à ce que ledit tas soit enlevé, de sorte que ledit tas soit constitué d'une quantité prédéterminée desdites particules de silicium.

5. Appareil selon l'une quelconque des revendications précédentes, dans lequel au moins une partie dudit premier conduit (126) est inclinée.

6. Appareil selon l'une quelconque des revendications précédentes, dans lequel lesdits premiers et seconds moyens de distribution de fluide comportent respectivement des premiers (134) et seconds (138) moyens formant vanne de commande destinés à mettre en marche et arrêter lesdits courants de fluide sous pression, de manière à permettre audit courant de s'écouler par impulsions discrètes de durée sélectionnée à des intervalles de temps sélectionnés.

7. Appareil selon la revendication 6, dans lequel :
lesdits premiers moyens formant vanne (134) associés auxdits premiers moyens de distribution de fluide bloquent et débloquent de manière sélective l'écoulement de fluide sous pression vers ladite chambre, de manière à entraîner ledit fluide à être distribué vers ladite chambre par impulsions discrètes de durée sélectionnée à des intervalles de temps sélectionnés,
lesdits seconds moyens formant vanne (138) associés auxdits seconds moyens de distribution de fluide bloquent et débloquent de manière sélective l'écoulement de fluide sous pression vers ledit second conduit, de manière à entraîner ledit fluide à être distribué vers ledit second conduit par impulsions discrètes de durée sélectionnée à des intervalles de temps sélectionnés, et
des moyens de commande (142) reliés auxdits premiers et seconds moyens formant vanne pour commander le fonctionnement desdits premiers et seconds moyens formant vanne de sorte que lesdits premiers moyens formant vanne permettent au fluide sous pression d'être distribué seulement lorsque lesdits seconds moyens formant vanne empêchent le fluide sous pression d'être distribué, et vice versa.

8. Appareil selon la revendication 7, dans lequel lesdits moyens de commande (142) engendrent des signaux de commande qui sont transmis vers lesdits premiers et seconds moyens formant vanne, et (a) lesdits premiers moyens formant vanne bloquent l'écoulement dudit premier courant de fluide sous pression en réponse à un premier signal de commande provenant desdits moyens de commande et débloquent l'écoulement dudit premier courant de fluide sous pression en réponse à un deuxième signal de commande provenant desdits moyens de commande, et (b) lesdits seconds moyens formant vanne bloquent l'écoulement dudit second courant de fluide sous pression en réponse à un troisième signal de commande provenant desdits moyens de commande et débloquent l'écoulement dudit second courant de fluide sous pression en réponse à un quatrième signal de commande provenant desdits moyens de commande.

9. Appareil selon l'une quelconque des revendications précédentes, dans lequel lesdites particules de silicium sont à peu près sphériques.

10. Appareil selon la revendication 9, dans lequel ladite chambre de réception (106) est munie d'un distributeur (100),
(a) ledit distributeur comportant :
(1) un premier alésage formant ladite chambre (106) en communication avec ledit orifice de décharge situé dans lesdits moyens de stockage, ladite chambre étant orientée par rapport audit orifice de décharge de telle sorte qu'une quantité prédéterminée de particules de silicium sphériques peut s'écouler sous la force de la gravité sous la forme d'un tas lâche situé à l'intérieur de ladite chambre, et être contenue dans celle-ci,
(2) un deuxième alésage incliné (126) formant un passage en pente qui est en communication avec ledit premier alésage formant ladite chambre,
(3) un troisième alésage partant dudit deuxième alésage,
(4) un quatrième alésage recoupant ledit deuxième alésage et formant lesdits deuxièmes moyens formant conduit (116), et
(b) lesdits troisièmes moyens formant conduit (76) étant reliés au troisième alésage situé dans ledit distributeur de manière à définir le troisième passage qui s'étend à partir dudit passage en pente vers ledit appareil de croissance du cristal.

11. Appareil selon l'une quelconque des revendications précédentes, dans lequel les particules de silicium ont un diamètre d'environ 0,7 mm +/- environ 1/2 millimètre.

12. Appareil selon l'une quelconque des revendications précédentes, dans lequel ledit fluide est de l'argon gazeux.

13. Procédé pour acheminer de manière intermittente, d'une manière s'écoulant librement, des particules de silicium sphériques jusqu'à l'intérieur d'un appareil de croissance de cristal (20) pour faire croître un corps de silicium cristallin tubulaire, ledit appareil comportant un four (22), et un creuset (24) destiné à contenir un produit fondu constitué de silicium agencé à l'intérieur dudit four,
ledit procédé consistant à transporter lesdites particules de silicium sphériques à partir des moyens de stockage (90) vers ledit appareil de croissance de cristal sous la pression du fluide gazeux via des moyens formant passage,
dans lequel lesdites particules de silicium sphériques sont déchargées par écoulement par gravité à partir desdits moyens de stockage à travers un orifice de décharge (96, 103, 108) jusqu'à l'intérieur d'une chambre de réception (106), ladite chambre étant configurée et agencée de manière à permettre que seule une quantité prédéterminée desdites particules de silicium sphériques s'accumule sous la forme d'un tas lâche à l'intérieur de ladite chambre,
ledit procédé comportant en outre les étapes consistant à :
injecter un premier courant de fluide sous pression à l'intérieur de ladite chambre de manière à entraîner le transfert dudit tas de particules de silicium sphériques en dehors de ladite chambre (106) jusqu'à l'intérieur d'un premier conduit (126),
injecter un second courant de fluide sous pression à l'intérieur dudit premier conduit (126) de manière à (i) entraîner lesdites particules de silicium sphériques situées dans ledit premier conduit, dans ledit second courant, et (ii) à transférer lesdites particules de silicium sphériques entraînées à travers un passage (76) reliant ledit premier conduit et ledit appareil de croissance de cristal, et
répéter ensuite en séquence les étapes précédentes de sorte qu'une quantité prédéterminée de particules de silicium sphériques soit distribuée de manière intermittente vers ledit appareil de croissance de cristal par l'application desdits premier et second courants de fluide sous pression.

14. Procédé selon la revendication 13, dans lequel le creuset (24) dudit appareil destiné à la croissance de corps de silicium cristallin tubulaires a une paroi d'extrémité formant fond et une ouverture située dans ladite partie d'extrémité formant fond, l'appareil comportant en outre un tuyau creux (60) s'étendant à travers ladite paroi d'extrémité formant fond et se terminant au-dessus dudit creuset, et un mécanisme d'acheminement (19) destiné à transporter lesdites particules de silicium sphériques à travers ledit tuyau creux et à éjecter lesdites particules de silicium sphériques à partir de l'extrémité supérieure dudit tuyau creux de sorte que lesdites particules de silicium sphériques tombent par gravité à l'intérieur dudit creuset, l'orifice de décharge (96, 103, 108) desdits moyens de stockage (90) faisant face vers le bas et l'appareil de croissance de cristal comportant aussi des moyens de transport de particules comportant une source de fluide sous pression (136), les premiers moyens de distribution de fluide sous pression comportant des premiers moyens formant vanne (134) reliés auxdits moyens formant passage situés en aval dudit orifice, et des seconds moyens de distribution de fluide sous pression comportant des seconds moyens formant vanne (138) reliés auxdits moyens formant passage situés en aval desdits premiers moyens de distribution de fluide, lesdits premiers et seconds moyens formant vanne étant commandés par des moyens de commande, dans lequel
(1) lesdites étapes d'injection de courants de fluide sous pression sont réalisées de manière alternée à intervalles presélectionnés,
(2) lesdits moyens de transport de particules comportant en outre :
(i) un premier conduit (126) relié à une première extrémité de ladite chambre et au niveau de son autre extrémité à une première extrémité d'un troisième conduit (76) de manière à définir un premier passage s'étendant entre ladite chambre et ledit troisième conduit ; et un deuxième conduit (116) définissant un second passage qui recoupe ledit premier passage entre les extrémités opposées dudit premier conduit ; l'autre extrémité dudit troisième conduit étant reliée à l'extrémité inférieure dudit mécanisme d'acheminement de manière à définir un troisième passage (76) entre ledit premier passage et ledit mécanisme d'acheminement,
(ii) des premiers moyens de distribution de fluide (136, 134) destinés à alimenter un premier courant de fluide gazeux sous pression à partir desdits moyens de stockage vers ladite chambre, et
(iii) des seconds moyens de distribution de fluide (136, 138) destinés à fournir un second courant de fluide gazeux sous pression vers ledit deuxième passage.

15. Procédé selon la revendication 14, comportant l'actionnement desdits moyens de commande selon la séquence suivante :
(1) fermer lesdits seconds moyens formant vanne (138) et ouvrir lesdits premiers moyens formant vanne (134) de manière à permettre audit premier courant de fluide sous pression de s'écouler jusqu'à l'intérieur dudit premier conduit, en enlevant par conséquent ladite quantité prédéterminée de particules de silicium sphériques de ladite chambre et en entraînant lesdites particules de silicium sphériques jusqu'à l'intérieur dudit premier conduit, et
(2) fermer lesdits premiers moyens formant vanne (134) et ouvrir lesdits seconds moyens formant vanne (138) de manière à permettre audit second courant de fluide sous pression de s'écouler jusqu'à l'intérieur dudit premier conduit en aval dudit premier courant de fluide sous pression et après ceci l'intérieur du troisième conduit afin de transporter lesdites particules de silicium sphériques à travers ledit troisième conduit vers le mécanisme d'acheminement dudit appareil de croissance de cristal.

16. Procédé selon la revendication 15, comportant l'établissement de la synchronisation des moyens de commande de sorte que la période de temps entre l'ouverture desdits premiers moyens formant vanne de commande (134) et la fermeture desdits premiers moyens formant vanne de commande (134) permet audit premier courant de fluide sous pression d'entraîner ladite quantité prédéterminée de particules de silicium sphériques dans ladite chambre (106) et de transporter ladite quantité prédéterminée de particules de silicium sphériques sous la forme de particules entraînées jusqu'à l'intérieur dudit premier passage avant qu'une autre quantité desdites particules de silicium sphériques puisse passer par la force de la gravité à partir desdits moyens de stockage (90) jusqu'à l'intérieur de ladite chambre,
